**Europäisches Patentamt**

**European Patent Office**

**Office européen des brevets**

(19)

(11) Veröffentlichungsnummer: **0 169 272**
**B1**

(12) ## EUROPÄISCHE PATENTSCHRIFT

(45) Veröffentlichungstag der Patentschrift:
**11.05.88**

(21) Anmeldenummer: **84115752.2**

(22) Anmeldetag: **18.12.84**

(51) Int. Cl.⁴: **G 01 D 5/24**, G 01 B 7/14

(54) **Kapazitiver Abstandsmesser, insbesondere für hohe Temperaturen.**

(30) Priorität: **09.01.84 DE 3400462**

(43) Veröffentlichungstag der Anmeldung:
**29.01.86 Patentblatt 86/5**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 2 641 758**
**DE - A - 2 717 966**
**US - A - 4 122 708**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Tittizer, Gabriel. Dipl.-Ing., Auf dem Rosenberg 19b, D-5064 Rösrath-Hoffnungstal (DE)**

(74) Vertreter: **Mehl, Ernst, Dipl.-Ing. et al, Postfach 22 01 76, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft einen kapazitiven Abstandsmesser nach dem Oberbegriff des ersten Anspruchs. Abstandsmesser oder Weglängenaufnehmer werden in vielen Bereichen der Technik gebraucht, so z.B. zur Bestimmung der Stellung eines Stellorgans oder zur Aufzeichnung von Relativbewegungen irgendwelcher Strukturen.

Ein kapazitiver Dehnungsmesser für sehr kleine Dehnungen oder Relativbewegungen ist aus der EP-A2-0 088 278 bekannt, jedoch kann dieser nicht für die Messung von Abstandsänderungen im Bereich von mehreren Zentimetern eingesetzt werden.

Aufgabe der vorliegenden Erfindung ist ein kapazitiver Abstandsmesser, welcher mit einer Auflösung im Millimeterbereich Abstände bzw. Weglängen messen kann. Der Messbereich soll dabei je nach Anwendungsfall einige Zentimeter bis zu über einem Meter betragen können. Insbesondere soll der Aufbau des Abstandsmessers bei Verwendung geeigneter Materialien auch für Messungen bei über 1000°C geeignet sein.

Zur Lösung dieser Aufgabe wird ein kapazitiver Abstandsmesser nach dem Hauptanspruch vorgeschlagen. Er besteht erfindungsgemäss aus zwei in Messrichtung ausgedehnten, voneinander isolierten elektrischen Leitern, welche einen ortsfesten Kondensator bilden. Eine elektrisch leitfähige Hülse ist in Messrichtung verschiebbar, zumindest teilweise um die elektrischen Leiter angeordnet, ohne jedoch mit ihnen in elektrischem Kontakt zu stehen. Die Hülse ist mit dem einen Teil und der ortsfeste Kondensator mit dem anderen Teil, deren Abstand gemessen werden soll, verbunden, so dass die Hülse je nach dem Abstand der Teile den ortsfesten Kondensator ganz oder teilweise umgibt. Diese erfindungsgemässe Ausbildung hat verschiedene erhebliche Vorteile. Zunächst können die Zuleitungen zu dem Kondensator, da dieser ortsfest ist, aus unflexiblen, hochtemperaturbeständigen Materialien gebildet werden, was z.B. bei zwei gegeneinander verschiebbaren Kondensatorplatten nicht möglich wäre. Der ortsfeste Kondensator wird durch die verschiebbare Hülse in seinem Aussenfeld beeinflusst, was zu einer unterschiedlichen Kapazität je nach Stellung der Hülse führt. Die Beeinflussung des Aussenfeldes ist mechanisch viel einfacher zu bewerkstelligen, als beispielsweise die Verschiebung eines Dielektrikums zwischen zwei Kondensatorplatten. Der erfindungsgemässe Aufbau eines kapativiven Abstandsmessers ist mechanisch so einfach, dass eine grosse Zuverlässigkeit in der Funktion erreicht wird.

In weiterer Ausgestaltung der Erfindung wird in Anspruch 2 vorgeschlagen, dass die in Messrichtung ausgedehnten elektrischen Leiter, die den ortsfesten Kondensator bilden, in einem Keramikrohr eingebettet sind. Geeignete Keramikrohre mit parallel verlaufenden Führungen für elektrische Leiter können als Strang-Press-Material in grossen Längen hergestellt werden und sind sehr stabil. Ein Keramikrohr bildet gleichzeitig eine gute Isolierung der elektrischen Leiter untereinander und gegenüber der Hülse, und es bestehen Einsatzmöglichkeiten auch für sehr hohe Temperaturen.

In spezieller Ausgestaltung der Erfindung wird dazu im Anspruch 3 vorgeschlagen, dass das Keramikrohr aus Aluminiumoxid ($Al_2O_3$) bestehen soll. Dieser Material hat sich als genügend temperaturschockbeständig erwiesen, und es lässt sich mit so glatter und fester Oberfläche herstellen, dass auch bei häufiger Verschiebung der Hülse praktisch kein Abrieb ensteht.

Im Anspruch 4 wird in weiterer Ausgestaltung der Erfindung vorgeschlagen, dass die elektrisch leitfähige Hülse ein Metallrohr ist. Diese Metallrohr gleitet je nach Abstand der auszumessenden Teile mehr oder weniger weit über den ortsfesten Kondensator und verändert dessen Kapazität.

Im Anspruch 5 wird alternativ zum Anspruch 4 vorgeschlagen, dass die elektrisch leitfähige Hülse ein aussen mit einem elektrisch leitfähigen Material umgebenes Keramikrohr ist, wobei dieses Keramikrohr vorzugsweise aus dem gleichen Material bestehen soll wie das innere, den ortsfesten Kondensator beinhaltende Keramikrohr. Diese Ausführungsform empfiehlt sich besonders bei der Anwendung unter extremen Umgebungsbedingungen, insbesondere hohen Temperaturen. Versuche mit einer solchen Ausführungsform in über 900°C heisser Heliumatmosphäre haben gezeigt, dass die beiden keramischen Materialien problemlos gegeneinander verschiebbar bleiben, ohne dass ein grosser Abrieb auftritt. Ein direkt über ein keramisches Rohr geschobenes metallisches Rohr würde unter Umständen einen leichten metallischen Abrieb auf dem Keramikrohr zurücklassen, der bei Längzeitmessungen störend sein könnte.

In spezieller Ausgestaltung der Erfindung wird im Anspruch 6 vorgeschlagen, dass die elektrisch leitfähige Hülse zwar ein Metallrohr ist, welches aber innen zumindest teilweise mit einem Keramikrohr ausgekleidet ist. Dies hat die gleiche Wirkung wie bei dem in Anspruch 5 beschriebenen Ausführungsbeispiel, da ein direkter Kontakt zwischen Keramik und Metall auf diese Weise verhindert wird. Die jeweilige genaue Ausführung richtet sich nach den zu messenden Längen und den Umgebungsbedingungen.

Im Anspruch 7 ist in weiterer Ausgestaltung der Erfindung vorgeschlagen, dass entweder das den ortsfesten Kondensator beinhaltende Keramikrohr oder die Hülse oder beide mit etwas Spiel an den Teilen, deren Abstand gemessen werden soll befestigt sind. Bei Temperaturschwankungen oder bei nicht ganz exakt in Messrichtung verlaufenden Bewegungen der einzelnen Teile kann es zu einem Verkanten der ineinanderzuschiebenden Teile kommen. Je nach Anwendungsfall ist es daher sinnvoll, Hülse und/oder Keramikrohr nicht starr mit den Teilen zu verbinden, sondern etwas Spiel senkrecht zur Messrichtung zu ermöglichen. Mit Rücksicht auf die Zuleitungen kann es sinnvoll sein, vorzugsweise die Hülse mit einem geringen Spiel anzubringen, jedoch ist es selbst bei Verwendung von starren Zuleitungen möglich, wie anhand der Beschreibung näher erläutert, auch den ortsfesten Kondensator mit etwas Bewegungsfreiheit anzuordnen.

Für Präzisionsmessungen wird in Anspruch 8 bzw. 9 vorgeschlagen, dass der kapazitive Abstandsmesser einen Referenzkondensator aufweist, welcher gleichen Betriebsbedingungen wie der Messkondensator unterliegt, jedoch nicht in dem Einflussbereich der Hülse verläuft. Da sich bei unterschiedlichen Temperaturen verschiedene Einflüsse störend bemerkbar machen, ist für sehr genaue Messungen eine Kompensation dieser Störungen erforderlich. Da sie theoretisch und messtechnisch nicht immer präzise erfasst werden können, bietet sich die Verwendung eines Referenzkondensators unter gleichen Betriebsbedingungen an. Änderungen der Dielektrizitätskonstanten von Keramikrohr und Umgebung, Ausdehnung der elektrischen Leiter und ähnliche Einflüsse lassen sich auf diese Weise eliminieren, ohne dass sie genau bekannt sein müssen.

Im Anspruch 9 wird dazu in spezieller Ausgestaltung der Erfindung vorgeschlagen, dass der Messkondensator und der Referenzkondensator zu einer Brückenschaltung verschaltet sind, eine an sich bekannte und gut geeignete Methode zur Kompensation von unerwünschten Einflüssen. Wie im Ausführungsbeispiel noch näher erläuert, kann beispielsweise der Referenzkondensator in weiteren Bohrungen in dem den ortsfesten Kondensator tragenden Keramikrohr untergebracht werden. Dabei dürfen die den Referenzkondensator bildenden elektrischen Leiter nur in dem Teil des Keramikrohres verlaufen, welcher nicht von der Hülse beeinflusst wird. Ist dieser Bereich zu klein, so muss der Referenzkondensator an anderer Stelle angeordnet werden. Er sollte dann einen ähnlichen Aufbau besitzen, wie der ortsfeste Messkondensator. Eine weitere Möglichkeit der Anordnung ist aus Anspruch 9 ersichtlich. Sind Messkondensator und Referenzkondensator zu einer Brückenschaltung verschaltet, so werden nur drei Zuleitungen benötigt, wodurch der Aufwand an Durchführungen vertretbar bleibt.

Ein Ausführungsbeispiel der Erfindung ist in der Zeichnung dargestellt und zwar zeigen

Fig. 1 einen Längsschnitt durch einen erfindungsgemässen kapazitiven Messaufnehmer,

Fig. 2 einen Querschnitt entlang der Linie II-II durch den kapazitiven Abstandsmesser und

Fig. 3 schematisch die Möglichkeit der Anordnung eines Referenzkondensators.

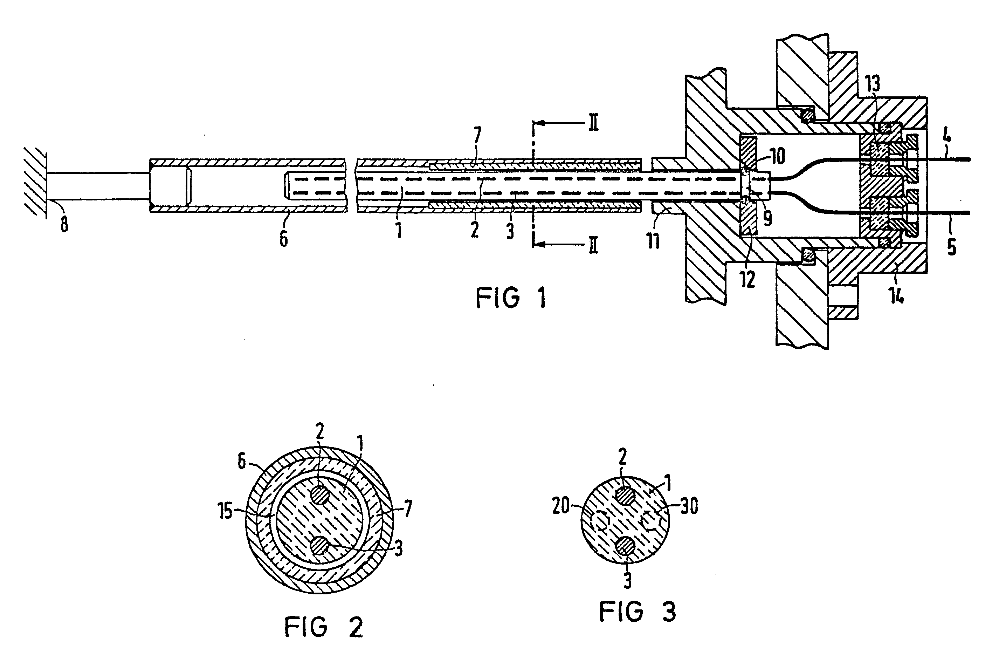

Die erfindungswesentlichen Teile des kapazitiven Abstandsmessers sind in Fig. 1 dargestellt. In einem Keramikrohr 1 sind in zwei in Längsrichtung verlaufenden Kanälen zwei elektrische Leiter 2, 3 untergebracht, welche einen ortsfesten Kondensator bilden. Die Zuleitungen 4, 5 des ortsfesten Kondensators 2, 3 sind nach aussen geführt zu einer nicht näher dargestellten Messanordnung zur Bestimmung der Kapazität. Eine elektrisch leitende Hülse 6 ist verschiebbar konzentrisch um das Keramikrohr 1 mit dem ortsfesten Kondensator 2, 3 angeordnet, wobei gegebenenfalls die elektrisch leitende Hülse 6 auf einem ganz oder teilweise in ihrem Inneren verlaufenden Keramikrohr 7 angeordnet sein kann, welches zur präzisen Führung und zur Verringerung der Reibung dient. Der ortsfeste Kondensator 2, 3 ist mit einem Teil 11 verbunden, dessen Abstand von einem anderen Teil 8 gemessen werden soll. Dementsprechend ist die Hülse 6 mit dem Teil 8 verbunden, so dass eine Änderrung des Abstandes zwischen den Teilen 8, 11 zu einer Verschiebung der elektrisch leitfähigen Hülse auf dem ortsfesten Kondensator und damit zu einer Änderung der Kapazität führt. Um ein mögliches Verkanten der ineinander verlaufenden Teile zu vermeiden, ist im Ausführungsbeispiel oder ortsfeste Kondensator mit etwas Spiel in eine Bohrung im Teil 11 eingesetzt. Um eine Bewegung in Messrichtung jedoch zu vermeiden, ist der ortsfeste Kondensator mit einer Nut 9 versehen, in welche ein Metallring 10 eingelegt ist, der von einer Gegenplatte 12 gehalten wird. Diese Halterung ermöglicht ein geringes Spiel, ohne dass jedoch eine Verfälschung des Messwertes entstehen kann. Auch die Zuleitungen 4, 5 werden durch diese kleine Bewegungsmöglichkeit nicht ausserhalb ihrer Elastizitätsgrenzen beeinflusst. Gegebenenfalls kann auch die Hülse 6 mit Spiel in einer ähnlichen Aufhängung an dem Teil 8 befestigt werden, Falls die Bewegungsmöglichkeiten der Teile dies erforderlich machen. Bei einem Einsatz des Abstandsmessers unter sehr hohen Temperaturen müssen natürlich alle Teile aus entsprechend geeigneten Materialien hergestellt sein, wobei in agressiver Umgebung für die elektrischen Leiter beispielsweise auch Platin als Material in Betracht kommt. Entsprechend den hohen Temperaturen muss die Isolierung und dichte Durchführung der Zuleitungen ausgelegt sein, was in der Zeichnung durch Quetschdichtungen 13 und ein nicht näher beschriebenes Kammersystem angedeutet ist. Die Durchführung von elektrischen Leitungen aus einem gegebenenfalls heissen und unter Druck stehenden System ist jedoch Stand der Technik und wird beispielsweise bei Thermoelementen in grossem Umfang angewendet.

Fig. 2 veranschaulicht noch einmal die Verhältnisse anhand eines Querschnitts durch Messkondensator und Hülle. Das innere Keramikrohr 1 trägt die elektrichen Leiter 2, 3 in entsprechenden Kanälen, wobei die Kanäle natürlich nach Möglichkeit exakt parallel verlaufen sollen. Die elektrisch leitende Hülse 6 ist verschiebbar um das Keramikrohr 1 angeordnet, wobei die Hülse 6 innen mit einem Keramikrohr 7 ausgekleidet sein kann. Der Zwischenraum 15 zwischen innerem Keramikrohr 1 und Hülse 6 ist übertrieben gross dargestellt, jedoch muss er eine gewisse Grösse zur Vermeidung von Verkantungen aufweisen. Da die elektrisch leitfähige Hülse 6, die das Aussenfeld des ortsfesten Kondensators 2, 3 beeinflusst, keine grossen Ströme aufnehmen muss, kann sie sehr dünn sein, gegebenenfalls auch aus einer auf das Keramikrohr 7 aufgedampften oder sonstwie aufgebrachten elektrisch leitfähigen Beschichtung bestehen.

In Fig. 3 wird schematisch eine Möglichkeit zur Unterbringung eines Referenzkondensators angedeutet. Dazu weist das innere Keramikrohr nicht nur Führungskanäle für die elektrischen Leiter 2, 3 sondern noch zwei weitere Führungskanäle 20, 30 für zusätzliche elektrische Leiter auf. Diese zusätzlichen elektrischen Leiter ragen nur ein kleines Stück in das keramische Rohr 1 hinein, nämlich gerade soweit, dass sie von der elektrisch leitfähigen Hülse 6 bei keinem Messzustand beeinflusst werden. Der so entstehende Referenzkondensator ermöglicht eine Kompensation von störenden Einflüssen, wobei ein Leiter des Referenzkondensators mit einem Leiter des Messkondensators verbunden sein kann, so dass nur drei Zuleitungen nach aussen geführt werden müssen.

Die vorliegende Erfindung hat sich bisher beispielsweise als Wegaufnehmer in einer Heissgasarmatur eines Heliumversuchskreislaufs bei über 900°C bewährt.

**Patentansprüche**

1. Kapazitiver Abstandsmesser mit einer dem Abstand von zwei Teilen (8, 11) proportionalen oder umgekehrt proportionalen Kapazität, gekennzeichnet durch folgende Merkmale:
a) Zwei sich in Messrichtung erstreckende voneinander isolierte elektrische Leiter (2, 3) bilden einen ortsfesten Kondensator.
b) Eine elektrisch leitfähige Hülse (6) ist in Messrichtung verschiebbar zumindest teilweise um die elektrischen Leiter (2, 3) angeordnet, ohne mit ihnen in elektrischem Kontakt zu stehen.
c) Die Hülse (6) ist mit dem einen Teil (8) und der ortsfeste Kondensator (2, 3) mit dem anderen Teil (11), deren Abstand gemessen wird, verbindbar, so dass die Hülse (6) je nach dem Abstand der Teilke (8, 11) den ortsfesten Kondensator (2, 3) ganz oder teilweise umgibt.

2. Kapazitiver Abstandsmesser nach Anspruch 1, gekennzeichnet durch folgendes Merkmal: Die sich in Messrichtung erstreckenden elektrischen Leiter (2, 3) sind in einem Keramikrohr (1) eingebettet.

3. Kapazitiver Abstandsmesser nach Anspruch 2, gekennzeichnet durch folgendes Merkmal: Das Keramikrohr (1) besteht aus $Al_2O_3$.

4. Kapazitiver Abstandsmesser nach einem der Ansprüche 1 - 3, gekennzeichnet durch folgendes Merkmal: Die elektrisch leitfähige Hülse (6) ist ein Metallrohr.

5. Kapazitiver Abstandsmesser nach einem der Ansprüche 1 - 3, gekennzeichnet durch folgendes Merkmal: Die elektrisch leitfähige Hülse (6) ist ein aussen mit einem elektrisch leitfähigen Material umgebenes Keramikrohr, vorzugsweise aus dem gleichen Material wie das innere Keramikrohr (1).

6. Kapazitiver Abstandsmesser nach einem der Ansprüche 1 - 3, gekennzeichnet durch folgendes Merkmal: Die elektrisch leitfähige Hülse (6) ist ein Metallrohr, welches innen zumindest teilweise mit einem Keramikrohr (7) ausgekleidet ist.

7. Kapazitiver Abstandsmesser nach einem der vorhergehenden Ansprüche, gekennzeichnet durch folgendes Merkmal: Entweder das den ortsfesten Kondensator (2, 3) beinhaltende Keramikrohr (1) oder die Hülse (6) oder beide sind mit etwas Spiel normal zur Messrichtung an den Teilen (8, 11) befestigt.

8. Kapazitiver Abstandsmesser nach einem der vorhergehenden Ansprüche, gekennzeichnet durch folgendes Merkmal: Der kapazitive Abstandsmesser weist einen Referenzkondensator (20, 30) auf, welcher gleichen Betriebsbedingungen wie der Messkondensator (2, 3) unterliegt, jedoch nicht in dem Einflussbereich der Hülse (6) verläuft.

9. Kapazitiver Abstandsmesser nach Anspruch 8, gekennzeichnet durch folgendes Merkmal: Der Referenzkondensator liegt konzentrisch zur und ausserhalb der elektrisch leitfähigen Hülsen (6) und weist das gleiche Dielektrikumsmaterial auf wie der Messkondensator (2, 3).

10. Kapazitiver Abstandsmesser nach Anspruch 8 oder 9, gekekennzeichnet durch folgendes Merkmal: Der Messkondensator (2, 3) und der Referenzkondensator (20, 30) sind zu einer Brückenschaltung verschaltet.

**Claims**

1. Capacitive distance meter having a capacitance which is proportional or inversely proportional to the distance between two parts (8, 11), characterised by the following features:
a) Two electrical conductors (2, 3), which extend in the direction of measurement and which are isolated from each other, form a stationary capacitor.
b) An electrically conductive sleeve (6) is arranged, so that it is displaceable in the direction of measurement, at least partially around the electrical conductors (2, 3) without being in electrical contact with them.
c) The sleeve (6) is connectable with one part (8) and the stationary capacitor (2, 3) is connectable with the other part (11), the distance between which parts is measured, in such a way that the sleeve (6), according to the distance between the parts (8, 11), completely or partly encircles the stationary capacitor (2, 3).

2. Capacitive distance meter according to claim 1, characterised by the following feature: The electrical conductors (2, 3) which extend in the direction of measurement are embedded in a ceramic tube (1).

3. Capacitive distance meter according to claim 2, characterised by the following feature: The ceramic tube (1) is made of $Al_2O_3$.

4. Capacitive distance meter according to one of the claims 1 - 3, characterised by the following feature: The electrically conductive sleeve (6) is a metal tube.

5. Capacitive distance meter according to one of the claims 1 - 3, characterised by the following feature: The electrically conductive sleeve (6) is a ceramic tube, which is encircled on the outside with an electrically conductive material and is preferably of the same material as the inner ceramic tube (1).

6. Capacitive distance meter according to one of the claims 1 - 3, characterised by the following feature: The electrically conductive sleeve (6) is a metal tube which is lined on the inside at least partly with a ceramic tube (7).

7. Capacitive distance meter according to one of the preceding claims, characterised by the following feature: Either the ceramic tube (1) containing the stationary capacitor (2, 3) or the sleeve (6) or both are secured to the parts (8, 11) with some play normal to the direction of measurement.

8. Capacitive distance meter according to one of the preceding claims, characterised by the following feature: The capacitive distance meter includes a reference capacitor (20, 30) which is subject to the same operating conditions as the measuring capacitor (2, 3), yet does not extend within the influential reach of the sleeve (6).

9. Capacitive distance meter according to claim 8, characterised by the following feature: The reference capacitor lies concentric to and outside the electrically conductive sleeve (6) and has the same dielectric material as the measuring capacitor (2, 3).

10. Capacitive distance meter according to claim 8 or 9, characterised by the following feature: The measuring capacitor (2, 3) and the reference capacitor (20, 30) are connected to a bridge circuit.

## Revendications

1. Dispositif capacitif de mesure d'écarts, comprenant une capacité proportionnelle ou inversement proportionnelle à la distance entre deux pièces, remarquable par les caractéristiques suivantes:

a) deux conducteurs (2, 3) électriques, isolés l'un de l'autre et s'étendant dans la direction de mesure forment un condensateur fixe,

b) une douille (6) conductrice de l'électricité est montée coulissante dans la direction de mesure, au moins partiellement autour des conducteurs (1, 2) électriques, sans être en contact électrique avec eux,

c) la douille (6) peut être reliée à l'une des pièces (8) et le condensateur (2, 3) à l'autre pièce (11) dont on mesure l'écartement de manière que la douille (6) entoure en tout ou en partie le condensateur (2, 3) fixe suivant la distance entre les pièces (8, 11).

2. Dispositif capacitif de mesure d'écarts suivant la revendication 1, remarquable par la caractéristique suivante: les conducteurs électriques (2, 3) s'étendant dans la direction de mesure sont noyés dans un tube (1) en céramique.

3. Dispositif capacitif de mesure d'écarts suivant la revendication 2, remarquable par la caractéristique suivante: le tube (1) en céramiques est en Al$_2$O$_3$.

4. Dispositif capacitif de mesure d'écarts suivant l'une des revendications 1 à 3, remarquable par la caractéristique suivante: la douille (6) conductrice d'électricité est un tube métallique.

5. Dispositif capacitif de mesure d'écarts suivant l'une des revendications 1 à 3, remarquable par la caractéristique suivante: la douille (6) conductrice de l'électricité est un tube en céramique, de préférence en le même matériau que le tube (1) intérieur en céramique, entouré d'un matériau conducteur de l'électricité.

6. Dispositif capacitif de mesure d'écarts suivant l'une des revendications 1 à 3, remarquable par la caractéristique suivante: la douille (6) conductrice de l'électricité est un tube métallique qui est revêtu intérieurement au moins en partie d'un tube (7) en céramique.

7. Dispositif capacitif de mesure d'écarts suivant l'une des revendications précédentes, remarquable par la caractéristique suivante: ou bien le tube (1) en céramique, contenant le condensateur (2, 3), ou bien la douille (6), ou bien à la fois le condensateur (2, 3) et la douille (6) sont fixés aux pièces (8, 11) avec un peu de jeu dans le sens de la normale au dispositif de mesure.

8. Dispositif capacitif de mesure d'écarts suivant l'une des revendications précédentes, remarquable par la caractéristique suivante: le dispositif capacitif de mesure d'écarts comprend un condensateur de référence (20, 30), qui se trouve dans les mêmes conditions de fonctionnement que le condensateur de mesure (2, 3), mais qui ne sétend pas dans la région d'influence de la douille (6).

9. Dispositif capacitif de mesure d'écarts suivant la revendication 8, remarquable par la caractéristique suivante: le condensateur de référence est disposé concentriquement à la douille (6) conductrice de l'électricité et à l'extérieur de celle-ci et a le même matériau diélectrique que le condensateur de mesure (2, 3).

10. Dispositif capacitif de mesure d'écarts suivant la revendication 8 ou 9, remarquable par la caractéristique suivante: le condensateur de mesure (2, 3) et le condensateur de référence (20, 30) sont montés en pont.

FIG 1

FIG 2

FIG 3

0 169 272